# EUROPÄISCHE PATENTSCHRIFT

(11) **EP 2 247 649 B1**
(45) Veröffentlichungstag und Bekanntmachung des Hinweises auf die Patenterteilung: **10.04.2013**
(21) Anmeldenummer: 09705528.9
(22) Anmeldetag: 29.01.2009
(51) Int. Cl.: C08G 69/26, C08G 69/28, C08J 5/04, C08K 7/14, C08L 77/00, C08K 7/06

(54) **FASERVERSTÄRKTE POLYAMID[5,10] FORMMASSEN**
FIBER-REINFORCED POLYAMIDE[5,10] MOLDING COMPOSITIONS
COMPOSITIONS DE MOULAGE À BASE DE POLYAMIDE[5,10] RENFORCÉES PAR DES FIBRES

(30) Priorität: 31.01.2008 EP 08101120
(43) Veröffentlichungstag der Anmeldung: 10.11.2010
(73) Patentinhaber: BASF SE, 67056 Ludwigshafen (DE)
(72) Erfinder: YAMAMOTO, Motonori, 68199 Mannheim (DE); JEONG, Weol Kyu, Miryongdong Gunsan (KR); SCHNELLER, Arnold, 64342 Seeheim-Jugenheim (DE); SCHEIBITZ, Matthias, 69469 Weinheim (DE); GRUBER, Freddy, 76877 Offenbach (DE); DEININGER, Jürgen, 68723 Oftersheim (DE)
(86) Internationale Anmeldenummer: PCT/EP2009/051008
(87) Internationale Veröffentlichungsnummer: WO 2009/095441

(56) Entgegenhaltungen:
- EP-A- 0 327 978
- WO-A-2007/113127
- US-A- 2 130 948
- US-A1- 2005 003 497
- COFFMAN D D ET AL: "POLYMERIC AMIDES FROM DIAMINES AND DIBASIC ACIDS" JOURNAL OF POLYMER SCIENCE, POLYMER CHEMISTRY EDITION, INTERSCIENCE POUBLISHERS, NEW YORK, NY, US, Bd. 2, 1. Januar 1947 (1947-01-01), Seiten 306-313, XP009071844 ISSN: 0360-6376

## Beschreibung

Die vorliegende Erfindung betrifft Polyamid[5,10]-Formmassen enthaltend
A) 40 bis 90 Gew.-% eines Polyamids[5,10],
B) 10 bis 60 Gew.-% faser- oder mineralhaltiger Füllstoffe
C) 0 bis 20 Gew.-% weiterer Zusatzstoffe,
wobei die Summe der Gewichtsprozente der Komponenten A) bis C) 100 % ergibt.

Außerdem betrifft die vorliegende Erfindung ein Verfahren zur Herstellung derartiger Formmassen, die Verwendung derartiger Formmassen zur Herstellung von Formkörpern jeglicher Art und die hierbei erhältlichen Formkörper, vorzugsweise Kfz-Karosserieteile oder Elektronikbauteile jeglicher Art , Folien und Fasern.

Aus WO2007/113127 ist ein Verfahren zur Herstellung von Pentamethylendiamin und dessen Polykondensation mit aliphatischen Dicarbonsäuren zu Polyamiden bekannt. Über Polyamid[5,10] ist in der Literatur wenig bekannt. Handelsübliche faserverstärkte Polyamide wie Polyamid [6] oder Polyamid[6,10] weisen häufig eine nicht zufrieden stellende Oberflächenqualität auf. Insbesondere tritt diese mangelnde Oberflächenqualität bei schwarz eingefärbten Polyamiden zu Tage.

Ziel der vorliegenden Erfindung war es, die Oberflächenqualität von faserverstärkten - insbesondere schwarz eingefärbten - Polyamiden zu steigern ohne die mechanischen Eigenschaften zu verschlechtern.

Überraschenderweise weisen die erfindungsgemäßen Polyamide[5,1 0] eine deutlich bessere Oberflächenqualität auf als vergleichbare PA[6] und PA[6,1 0] Formmassen; gleichzeitig sind die mechanischen Eigenschaften wie beispielsweise die Fließfähigkeit und die Schwindung ebenfalls verbessert.

Die Polyamide[5,1 0] können - wie in WO 2007/113127 beschrieben - hergestellt werden. In den erfindungsgemäßen Formmassen sind die Polyamide[5,10] (Komponente A) in einem Anteil von 40 bis 90, vorzugsweise 55 bis 88 und insbesondere 60 bis 80 Gew.-% enthalten.

Als faserhaltige Füllstoffe B) seien Kohlenstofffasern, Glasfasern oder Naturfasern genannt, die in Mengen von 10 bis 60 Gew.-%, insbesondere von 15 bis 40, vorzugsweise von 20 bis 35 Gew.-% eingesetzt werden.

Als bevorzugte faserförmige Füllstoffe seien Glasfaser, Kohlenstofffasern, AramidFasern und Kaliumtitanat-Fasern genannt, wobei Glasfasern als E-Glas besonders bevorzugt sind. Diese können als Rovings oder insbesondere als Schnittglas in den handelsüblichen Formen eingesetzt werden. Die Fasern weisen im Allgemeinen einen Durchmesser von 3 bis 30 µm, bevorzugt 6 bis 20 µm und besonderes bevorzugt von 8 bis 15 µm auf. Die Faserlänge im Compound beträgt in der Regel 20 µm bis 1000 µm, bevorzugt 180 bis 500 µm und besonderes bevorzugt 200 bis 400 µm.

Unter Naturfasern werden Cellulosefasern, Hanffasern, Sisal oder Kenaf verstanden.

Die faserförmigen Füllstoffe können zur besseren Verträglichkeit mit dem Thermoplasten mit einer Silanverbindung oberflächlich vorbehandelt sein.

Geeignete Silanverbindungen sind solche der allgemeinen Formel

(X-(CH₂)ₙ)ₖ-Si-(O-CₘH₂m₊₁)₄₋ₖ

in der die Substituenten folgende Bedeutung haben:
- X: NH₂-,

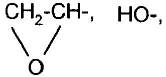

- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,01 bis 2, vorzugsweise 0,025 bis 1,0 und insbesondere 0,05 bis 0,5 Gew.-% (bezogen auf B) zur Oberflächenbeschichtung eingesetzt.

Als geeigneter mineralhaltiger Füllstoffe B kann ein mineralischer Füllstoff mit stark ausgeprägtem nadelförmigen Charakter dienen. Als Beispiel sei nadelförmiger Wollastonit genannt. Vorzugsweise weist das Mineral ein UD-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere teilchenförmige, mineralische Füllstoffe B) seien Talkum, Kaolin, calciniertes Kaolin, Wollastonit und Kreide genannt sowie zusätzlich plättchen- oder nadelförmige Füllstoffe bevorzugt in Mengen zwischen 10 und 60 %, vorzugsweise 10 und 50 Gew.-%. Bevorzugt werden hierfür Böhmit, Bentonit, Montmorillonit, Vermicullit, Hektorit und Laponit eingesetzt.

Pigmente wie Nigrosin, Titandioxid, Zinksulfid, Ultramarinblau, Eisenoxid, Anthrachinone, Chinacridone, Phthalocyanine, Perylene oder deren Mischungen haben sich als geeignete Zusatzstoffe C erwiesen. Besonders bevorzugt werden nanopartikuläre Zusatzstoffe eingesetzt.

Erfindungsgemäß kann als Komponente C) ein elektrisch leitfähiges Additiv zugesetzt werden. Vorzugsweise wird nur ein elektrisch leitfähiges Additiv eingesetzt, gegebenenfalls können jedoch auch zwei oder mehrere elektrisch leitfähige Additive eingesetzt werden. Als elektrisch leitfähige Additive eignen sich beispielsweise Carbon-Nanotubes, Graphit oder Ruß. Besonders bevorzugt ist der Einsatz von Ruß. Neben der Erhöhung der Leitfähigkeit dient er zur Schwarzeinfärbung.

Der Zusatz von vorzugsweise Ruß und Graphit erfolgt im Allgemeinen in Mengen zwischen 0,01 und 20 %, vorzugsweise 0,01 und 10 Gew.-% und insbesondere bevorzugt 0,01 und 5 Gew.-%.

Im Rahmen der vorliegenden Erfindung versteht man unter Carbon-Nanotubes kohlenstoffhaltige Makromoleküle, in denen der Kohlenstoff (hauptsächlich) Graphitstruktur aufweist und die einzelnen Graphitschichten schlauchförmig angeordnet sind. Nanotubes sowie deren Synthese sind in der Literatur bereits bekannt (beispielsweise J. Hu et al., Acc. Chem. Res. 32 (1999), 435 - 445). Im Rahmen der vorliegenden Erfindung kann grundsätzlich jegliche Art von Nanotubes eingesetzt werden.

Vorzugsweise beträgt der Durchmesser der einzelnen schlauchförmigen Graphitschichten (Graphitschläuche) 4 bis 12 nm, insbesondere 5 bis 10 nm. Nanotubes lassen sich prinzipiell in sogenannte single walled nanotubes (SWNTs; "einwändige" Nanotubes) und multiwalled nanotubes (MWNTs; "mehrwändige" Nanotubes) unterscheiden. In den MWNTs sind somit mehrere Graphitschläuche übereinander gestülpt.

Ferner kann die äußere Form der Schläuche variieren, diese kann gleichförmigen Durchmesser innen und außen aufweisen, es sind aber auch knotenförmige Schläuche und wurmähnliche Strukturen (vermicular) herstellbar.

Das Aspektverhältnis (Länge des jeweiligen Graphitschlauches zu dessen Durchmesser) beträgt mindestens > 10, vorzugsweise > 5. Die Nanotubes haben eine Länge von mindestens 10 nm. Im Rahmen der vorliegenden Erfindung werden als Komponente E) MWNTs bevorzugt. Insbesondere weisen die MWNTs ein Aspektverhältnis von ca. 1000 : 1 sowie eine Durchschnittslänge von ungefähr 10 000 nm auf.

Die spezifische Oberfläche gemäß BET beträgt in der Regel 50 bis 2000 m²/g, vorzugsweise von 200 bis 1200 m²/g. Die bei der katalytischen Herstellung entstehenden Unreinheiten (z.B. Metalloxide) betragen in der Regel gemäß HRTEM von 0,1 bis 12 %, vorzugsweise von 0,2 bis 10 %.

Geeignete Nanotubes können unter der Bezeichnung "multiwall" von der Firma Hyperion Catalysis Int., Cambridge MA (USA) bezogen werden (siehe auch EP 205 556, EP 969 128, EP 270 666, US 6,844,061).

Als Leitruß kann jede gängige Form von Ruß eingesetzt werden, geeignet sind beispielsweise das Handelsprodukt Ketjenblack 300 der Firma Akzo.

Zur Leitfähigkeitsmodifizierung kann auch Leitruß eingesetzt werden. Bedingt durch graphitartige Schichten, die in amorphem Kohlenstoff eingebettet sind, leitet Ruß Elektronen (F. Camona, Ann. Chim. Fr. 13, 395 (1988)). Die Stromleitung erfolgt innerhalb der Aggregate aus Rußpartikeln und zwischen den Aggregaten, wenn die Abstände zwischen den Aggregaten klein genug sind. Um Leitfähigkeit bei möglichst geringer Dosierung zu erzielen, werden vorzugsweise Ruße mit anisotroper Struktur verwendet (G. Wehner, Advances in Plastics Technology, APT 2005, Paper 11,Katowice 2005). Bei solchen Rußen lagern sich die Primärpartikel zu anisotropen Strukturen zusammen, so dass die zum Erreichen der Leitfähigkeit nötigen Abstände der Rußpartikel in Compounds schon bei vergleichsweise geringer Beladung erreicht wird (C. Van Bellingen, N. Probst, E. Grivei, Advances in Plastics Technology, APT 2005, Paper 13, Katowice 2005).

Geeignete Rußtypen weisen beispielsweise eine Öl-Absorption (gemessen nach ASTM D 2414-01) von mindestens 60 ml/100g, bevorzugt mehr als 90 ml/100 g auf. Die BET-Oberfläche geeigneter Produkte beträgt mehr als 50, bevorzugt mehr als 60 m²/g (gemessen nach ASTM D 3037-89). Auf der Rußoberfläche können sich verschiedene funktionelle Gruppen befinden. Die Herstellung der Leitruße kann nach verschiedenen Verfahren erfolgen (G. Wehner, Advances in Plastics Technology, APT 2005, Paper 11, Katowice 2005).

Weiterhin kann auch Graphit als Leitfähigkeitsadditiv verwendet werden. Unter Graphit versteht man eine Modifikation des Kohlenstoffs wie sie beispielsweise in A. F. Hollemann, E. Wieberg, N. Wieberg, "Lehrbuch der anorganischen Chemie,", 91.-100. Aufl., S 701-702 beschrieben ist. Graphit besteht aus planaren Kohlenstoffschichten, die übereinander angeordnet sind. Graphit kann durch mahlen zerkleinert werden. Die Partikelgröße liegt im Bereich von 0,01 µm bis 1 mm, bevorzugt im Bereich 1 bis 250 µm.

Als Komponente C) können weitere Zusatzstoffe wie Stabilisatoren, Oxidationsverzögerer, Flammschutzmittel, Mittel gegen Wärmezersetzung und Zersetzung durch ultraviolettes Licht, Gleit- und Entformungsmittel, Färbemittel wie Farbstoffe, Weichmacher, Impact modifier usw. eingesetzt werden.

Als Beispiele für Flammschutzmittel sind roter Phosphor, Magnesiumhydroxid und Melamincyanurat genannt, die in der Regel in einer Konzentration von 1 bis 20 Gew.-%, bevorzugt 3 bis 15 Gew.-% und besonders bevorzugt 5 bis 10 Gew.-% eingesetzt werden können. Magnesiumhydroxid kann auch in höheren Konzentrationen bis zu 70 Gew.-% eingesetzt werden. Roter Phosphor kann in Form eines Masterbatch oder als Pulver eingesetzt werden.

Die Stabilisatoren können den Polyamid[5,10]-Formmassen in jedem Stadium der Herstellung zugesetzt werden, werden jedoch vorzugsweise möglichst früh zugegeben, um zu verhindern, dass die Zersetzung bereits beginnt, bevor der Stabilisator eingearbeitet ist.

Als Beispiele für Oxidationsverzögerer und Wärmestabilisatoren sind Halogenide von Metallen der Gruppe I des Periodensystems, z.B. Natrium-, Kalium-, und/oder Lithiumhalogenide, ggf. in Verbindung mit Kupfer(I)halogeniden, z.B. Chloriden, Bromiden, Jodiden, sterisch gehinderte Phenole, Hydrochinone, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Gleit- und Entformungsmittel werden in der Regel in Mengen von max. 1 Gew.-%, bezogen auf das Gesamtgewicht der Formmasse, zugesetzt. Beispiele hierfür sind Stearinsäure, Stearinalkohol, Stearinsäureamide und Calciumstearate.

Der Anteil der Komponente C) an den erfindungsgemäßen Formmassen beträgt hinsichtlich Füllstoffen 0 bis 20 Gew.-%, vorzugsweise 1 bis 15 Gew.-%, besonders bevorzugt 1,5 bis 10 Gew.-%, bezogen auf das Gesamtgewicht der Formmasse. Der Anteil der Komponente C) an den erfindungsgemäßen Formmassen beträgt hinsichtlich Stabilisator und Gleitmittel 0 bis 10 Gew.-, bevorzugt 0,05 bis 2 Gew.-% und besonders bevorzugt 0,08 bis 1 Gew.- %.

Vorzugsweise lassen sich die erfindungsgemäßen Polyamid[5,10]-Formmassen in einem zweistufigen Verfahren (Schritte i) bis ii)) herstellen:
i) 1,5-Pentamethylendiamin, hergestellt durch Fermentation mit Corynebacterium glutamicum, und Sebacinsäure, die - wie beispielsweise in US 2217515 beschrieben - hergestellt werden kann, werden polykondensiert und ;
ii) das so erhaltene Polyamid[5,10] mit 10 bis 60 Gew.-% faser- oder mineralhaltigen Füllstoff in einem Extruder compoundiert.

Polyamid[5,1 0] kann durch Polykondensation von 1,5 Pentamethylendiamin und Sebacinsäure in einem Molverhältnis von 0,95 : 1,05 bis 1,05:0,95 nach bekannten Methoden hergestellt werden. Die Kondensation kann entweder diskontinuierlich in einem Batch-Prozess oder auch kontinuierlich erfolgen. Bei einer diskontinuierlichen Herstellung der Polyamide legt man z.B. eine wässrige Lösung der Monomeren in einem Autoklaven vor und erhitzt sie auf im allgemeinen 200 bis 300°C. Dabei stellt sich ein Druck von 10 bis 50 oder eher 15 bis 30 bar ein, der durch Entspannen von überschüssigem Wasserdampf bis zu 4 Stunden konstant gehalten werden kann. Die Aufheizphase (bis zur gewünschten Reaktionstemperatur) dauert üblicherweise 0,5 bis 3 Stunden. Die Nachrührzeit, während dessen das Reaktionsgemisch bei 240 bis 300°C gehalten wird, beträgt in der Regel 1 bis 5 Stunden. Anschließend wird während einer Spanne von 0,5 bis 3 Stunden auf Normaldruck entspannt. Der Autoklavenaustrag wird beispielsweise in einem Wasserbad granuliert. Die kontinuierliche Fahrweise kann analog EP129195 oder 129196 durchgeführt werden.

Die Herstellung der erfindungsgemäßen Formmassen kann nach an sich bekannten Verfahren erfolgen, durch Abmischen der Komponenten Polyamid[5,10], A) und gegebenenfalls B) und C), in der Schmelze bei erhöhten Temperaturen oder aber durch Mischen der Komponenten in Mischvorrichtungen. Zweckmäßig verwendet man hierzu Extruder, z.B. Einschnecken- oder Zweischneckenextruder oder andere herkömmliche Plastifizierungsvorrichtungen, wie Brabender-Mühlen oder Banbury-Mischer. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzu gegeben werden. Die Mischtemperaturen liegen in der Regel bei 230 bis 320°C.

Das Molekulargewicht (Mn) der Polyamide [5,10] liegt vorzugsweise im Bereich von 1000 bis 100000, insbesondere im Bereich von 9000 bis 75000 und insbesondere bevorzugt im Bereich von 10000 bis 50000 g/mol.

Die erfindungsgemäßen Formmassen zeichnen sich durch gute Kerbschlagzähigkeit und Wärmeformbeständigkeiten (HDT B) aus. Gegenüber herkömmlichen Polyamiden konnte die Fließfähigkeit (MVR), der Oberflächenglanz (Glanz bestimmt nach DIN 67530 an Platten [60 x 60 x 2 mm]) und die Schwindung (bestimmt nach ISO 294-4 EN an Platten [60 x 60 x 2 mm]) verbessert werden.

Der Oberflächenglanz wurde nach DIN 67530 an Platten [60 x 60 x 2 mm] bestimmt. Die erfindungsgemäßen Formmassen weisen im Allgemeinen einen Mittelglanz (60°) von 30 bis 105 und bevorzugt von 40 bis 100 in Bezug auf eine polierte, schwarze Glasoberfläche auf.

Die Schwindung wurde nach ISO 294-4 EN an Platten [60 x 60 x 2 mm; 500 bar] bestimmt. Die erfindungsgemäßen Formmassen weisen im Allgemeinen eine Schwindung von 0,2 bis 1,0 % und bevorzugt von 0,2 bis 0,8 % auf.

Diese eignen sich zur Herstellung von Fasern, Folien und Formkörpern jeglicher Art. Nachfolgend sind einige Beispiele genannt: Zylinderkopfhauben, Motorradabdeckungen, Ansaugrohre, Ladeluftkühlerkappen, Steckverbinder, Zahnräder, Lüfterräder, Kühlwasserkästen.

Im Auto-Innenraum ist eine Verwendung für Armaturentafeln, Lenkstockschalter, Sitzteile, Kopfstützen, Mittelkonsolen, Getriebe-Komponenten und Türmodule, im Auto-Außenraum für Türgriffe, Außenspiegelkomponenten, Scheibenwischerkomponenten, Scheibenwischerschutzgehäuse, Ziergitter, Dachreling, Schiebedachrahmen, Motorabdeckungen, Zylinderkopfhauben, Ansaugrohre, Scheibenwischer sowie Karosserieaußenteile wie Kotflügel, Türverkleidung, Heckklappen, Spoiler, Seitenteile, Dachmodule und Motorhauben.

Die erfindungsgemäßen Formmassen eignen sich zur Herstellung von Brillenrahmen und zur Herstellung von Elektronikbauteilen wie z.B. Handygehäusen, Laptopbauteilen, Bildschirmscreenrahmen, Navigatorscreenrahmen, Taschenrechnerbauteile usw..

### Beispiele

### Charakterisierung der Formmassen

Das Molekulargewicht Mn der Polymeren wurde wie folgt bestimmt:
15 mg der Polymeren wurden in 10 ml Hexafluoroisopropanol (HFIP) gelöst. Jeweils 125 µl dieser Lösung wurden mittels Gelpermeationschromatographie (GPC) analysiert. Die Messungen wurden bei Raumtemperatur durchgeführt. Für die Elution wurde HFIP + 0,05 Gew.-% Trifluoroessigsäure-Kalium-Salz verwendet. Die Elutionsgeschwindigkeit betrug 0,5 ml/min. Dabei wurde folgende Säulenkombination verwendet (alle Säulen hergestellt von Fa. Showa Denko Ltd., Japan): Shodex® HFIP-800P (Durchmesser 8mm, Länge 5 cm), Shodex® HFIP-803 (Durchmesser 8mm, Länge 30 cm), Shodex® HFIP-803 (Durchmesser 8mm, Länge 30 cm). Die Polymere wurden mittels eines RI-Detektors (Differential-Refraktometrie) detektiert. Die Kalibrierung erfolgte mit eng verteilten Polymethylmethacrylat-Standards mit Molekulargewichten von Mn = 505 bis Mn = 2.740.000. Außerhalb dieses Intervalls liegende Elutionsbereiche wurden durch Extrapolation bestimmt.

Die Viskositätszahl der Polyamide wurde nach EN-ISO1628-1 an 0,5 gew.-%igen Lösungen in 96 Gew.-% Schwefelsäure gemessen. Die Polymere weisen in der Regel eine VZ von 10 bis 400 ml/g, bevorzugt 30 bis 300 und besonderes bevorzugt 50 bis 250 ml/g auf.

Der MVR wurde nach ISO1133 gemessen (275°C, 5kg Belastung). Die erfindungsgemäßen Polyamide weisen einen MVR von 5 bis 500 ml/10min, bevorzugt 10 bis 400, besonderes bevorzugt 20 bis 300 ml/10min auf.

Die Viskositätszahl der Polyamide wurde nach EN-ISO1628-1 an 0,5 gew.-%igen Lösungen in 96 Gew.-% Schwefelsäure gemessen. PA [5.10] +30% GF (Beispiel 1) weist eine Viskositätszahl von 151 ml/g auf.

Der Oberflächenglanz wurde nach DIN 67530 an Platten [60 x 60 x 2 mm] bestimmt. Der in Tabelle 1 angegebene Wert bezieht sich auf eine polierte, schwarze Glasoberfläche (100).

Die Schwindung wurde nach ISO 294-4 EN an Platten [60 x 60 x 2 mm; 500 bar] bestimmt. Der in Tabelle 1 angegebene Wert ist in % zur Länge angegeben.

### Herstellung von 1,5-Pentamethylendiamin

1,5 Pentamethylendiamin wurde durch Fermentation mit Corynebacterium glutamicum hergestellt (siehe WO2007/113127).

### Herstellung von Polyamiden

### Polyamid [5,10] [Vorstufe 1]

In einem Rührkessel wurden 12,5 kg wässrige 48,19%ige Pentamethylendiamin Lösung, 12,2 kg Sebacinsäure und 6,59 kg destilliertes Wasser vorgelegt. Die Reaktionsmischung wurde 10 mal mit Stickstoff gut gespült und auf 200°C erhitzt. Der Reaktionsgefäß wurde bei dieser Temperatur bei 17bar für 1 Stunde konstant gehalten. Der Druck wurde dann auf atmosphärischen Druck entspannt und die die Reaktionsmischung auf 270°C erhitzt. Unter Stickstoff wurde die Polymerisation bei dieser Temperatur für 70min fortgesetzt. Das so erhaltene Polymer hat eine VZ (Viskositätszahl) von 152 ml/g nach EN-ISO1628-1.

### Polyamid [6,10] [Vorstufe 2]

In einem Rührkessel wurden 10,11g wässrige 69,0%ige Hexamethylendiamin-Lösung, 12,20 kg Sebacinsäure und 16,04 kg destilliertes Wasser gegeben. Die Reaktionsmischung wurde 10 mal mit Stickstoff gut gespült und auf 200°C erhitzt. Der Druck wurde a bei dieser Temperatur bei 17bar für 1 Stunde konstant gehalten. Der Reaktionsgefäß wurde dann auf atmosphärischen Druck entspannt und die die Reaktionsmischung auf 270°C erhitzt. Das so erhaltene Polymer hat eine VZ (Viskositätszahl) von 153 ml/g nach EN-ISO1628-1.

### Polyamid [6] [Vorstufe 3]

Ultramid® B3 der Fa. BASF SE (VZ 149 ml/g) wurde verwendet.

### Herstellung der erfindungsgemäßen Formmassen

### Beispiel 1

Auf einem Zweischneckenextruder ZSK40 wurde eine Massestrom von 14kg/h Polyamid[5.10] (Vorstufe 1) und ein Massestrom von 6kg/h Glasfaser der Fa. OCF (OCF1110DS, Durchmesser 10µm) mit einem Durchsatz von 20kg/h bei 260°C eincompoundiert. Die Umdrehung der Schnecken betrug 200 rpm. Nach Granulierung wurde das Produkt bei 80°C für 16h getrocknet.

### Vergleichsbeispiel 2

Auf einem Zweischneckenextruder ZSK40 wurde eine Massestrom von 14kg/h Polyamid[6.10] (Vorstufe 2) und ein Massestrom von 6kg/h Glasfaser der Fa. OCF (OCF1110DS, Durchmesser 10µm) mit einem Durchsatz von 20kg/h bei 260°C eincompoundiert. Die Umdrehung der Schnecken betrug 200 rpm. Nach Granulierung wurde das Produkt bei 80°C für 16h getrocknet.

### Vergleichsbeispiel 3

Auf einem Zweischneckenextruder ZSK40 wurde eine Massestrom von 14kg/h Polyamid[6] (Vorstufe 3) und ein Massestrom von 6kg/h Glasfaser der Fa. OCF (OCF1110DS, Durchmesser 10µm) mit einem Durchsatz von 20kg/h bei 260°C eincompoundiert. Die Umdrehung der Schnecken betrug 200 rpm. Nach Granulierung wurde das Produkt bei 80°C für 16h getrocknet.

In Tabelle 1 wurden die Ergebnisse des Beispiels 1 denjenigen der Vergleichsbeispielen 2 und 3 sowie der Vorstufen 1 bis 3 gegenübergestellt.

**Tabelle1:**

| | Beispiel 1 | Vgl.bsp. 2 | Vgl.bsp. 3 |
|---|---|---|---|
| Glanz (60°)* | 62 | 30 | 35 |
| MVR (ml/10min) | 62 | 51 | 48 |
| VZ (ml/g) | 151 | 148 | 150 |
| Schwindung (%) Länge | 0,67 | 0,93 | 0,83 |
| | | | |

| | Vorstufe 1 | Vorstufe 2 | Vorstufe 3 |
|---|---|---|---|
| Glanz (60°)* | 101 | 102 | 101 |
| MVR (ml/10min) | 175 | 172 | 170 |
| VZ (ml/g) | 152 | 153 | 149 |

**Tabelle 2: weitere mechanische Eigenschaften von PA[5,10] + 30% Glasfasern; Bsp.1)**

| | Beispiel 1 |
|---|---|
| Anteil nachwachsender Rohstoffe | 100 % |
| ISO 179/1eU (RT) | 86 kJ/m² |
| ISO 179/1eU (-30°C) | 82 kJ/m² |
| ISO 179/1eA (RT) | 12 kJ/m² |
| ISO 179/1eA (-30°C) | 8 kJ/m² |
| E-Modul [ISO 527-2] | 8310 MPa |
| Zugfestigkeit [ISO 527-2] | 155 MPa |
| Zugdehnung [ISO 527-2] | 3,9 % |
| HDT A [ISO 75-2] | 186 °C |
| HDT B [ISO 75-2] | 208 °C |

Schmelzpunkt gemessen nach DSC (DIN EN ISO 11357) 215°C

## Patentansprüche

1. Polyamid[5,10]-Formmasse enthaltend
A) 40 bis 90 Gew.-% Polyamid[5,1 0];
B) 10 bis 60 Gew.-% faser- oder mineralhaltiger Füllstoffe und
C) 0 bis 20 Gew.-% weiterer Zusatzstoffe,
wobei die Summe der Gewichtsprozente der Komponenten A) bis C) 100 % ergibt.

2. Polyamid[5,10]-Formmassen nach Anspruch 1, enthaltend als Komponente A) Glasfasern, Kohlenstofffasern oder Naturfasern.

3. Polyamid[5,10]-Formmassen nach Anspruch 2, enthaltend als Komponente A) Schnittglasfaser oder Rovings.

4. Polyamid[5,10]-Formmassen nach den Ansprüchen 1 bis 3, enthaltend 15 bis 40 Gew.-% faserhaltigen Füllstoff.

5. Polyamid[5,10]-Formmassen nach den Ansprüchen 1 bis 4, enthaltend als Komponente C) Flammschutzmittel wie roter Phosphor, Magnesiumhydroxid oder Melamincyanurat.

6. Polyamid[5,10]-Formmassen nach den Ansprüchen 1 bis 5, enthaltend als Komponente C) teilchenförmige Füllstoffe wie Ruß, Graphit, Carbonnanotubes, Nigrosin, Titandioxid, Zinksulfid, Ultramarinblau, Eisenoxid, Anthrachinone, Chinacridone, Phthalocyanine, Perylene oder deren Mischungen.

7. Polyamid[5,10]-Formmassen nach Anspruch 6, enthaltend als Komponente C) 0,01 bis 5 Gew.-% Ruß.

8. Verfahren zur Herstellung von Polyamid[5,10]-Formmassen gemäß Anspruch 1 bis 3, **dadurch gekennzeichnet, dass**
i) 1,5-Pentamethylendiamin, hergestellt durch Fermentation mit Corynebacterium glutamicum, und Sebacinsäure polykondensiert werden; und
ii) das so erhaltene Polyamid[5,1 0] mit 10 bis 60 Gew.-% faser- oder mineralhaltigem Füllstoff in einem Extruder compoundiert wird.

9. Verwendung der Polyamid[5,10]-Formmassen gemäß einem der Ansprüche 1 bis 7 zur Herstellung von Formkörpern im Automobilbau oder in der Elektronik.

10. Fasern, Folien, Formkörper, erhältlich aus Polyamid[5,10]-Formmassen gemäß den Ansprüchen 1 bis 7.

## Claims

1. A pylon-5,10 molding composition comprising
A) from 40 to 90% by weight of a nylon-5,10,
B) from 10 to 60% by weight of fiber-containing or mineral-containing fillers, and
C) from 0 to 20% by weight of further additives,
where the total of the percentages by weight of components A) to C) is 100%.

2. The pylon-5,10 molding composition according to claim 1, comprising , as component B), glass fibers, carbon fibers or natural fibers.

3. The nylon-5,10 molding composition according to claim 2, comprising, as component B), chopped glass fiber or rovings.

4. The nylon-5,10 molding composition according to claims 1 to 3, comprising from 15 to 40% by weight of fiber-containing filler.

5. The nylon-5,10 molding composition according to claims 1 to 4, comprising, as component C), flame retardant, such as red phosphorus, magnesium hydroxide, or melamine cyanurate.

6. The nylon-5,10 molding composition according to claims 1 to 5, comprising as component C), particulate fillers, such as carbon black, graphite, carbon nanotubes, nigrosine, titanium dioxide, zinc sulfide, ultramarine blue, iron oxide, anthraquinones, quinacridones, phthalocyanines, perylenes, or a mixture of these.

7. The nylon-5,10 molding composition according to claim 6, comprising, as component C), from 0.01 to 5% by weight of carbon black.

8. A process for the pre of nylon-5,10 molding compositions according to any of claims 1 to 3, which comprises
i) polycondensing, 1,5-pentamethylenediamine, prepared via fermentation using *Corynebacterium glutamicum,* and sebacic acid; and
ii) compounding the resultant nylon-5,10 in an extruder with from 10 to 60% by weight of fiber-containing or mineral-containing filler.

9. The use of the nylon-5,10 molding compositions according to any of claims 1 to 7 for the production of moldings in automobile constructions or in electronics.

10. A fiber, a foil, or a molding, obtainable from nylon[5,10] molding compositions according to claims 1 to 7.

## Revendications

1. Matière à mouler polyamide[5,10] contentant
A) 40 à 90 % en poids de polyamide[5,10] ;
B) 10 à 60 % en poids de charges contenant des fibres ou des minéraux et
C) 0 à 20 % en poids d'autres additifs,
la somme des pourcentages en poids des composants A) à C) étant égale à 100 %.

2. Matières à mouler polyamide[5,10] selon la revendication 1, contenant comme composant B) des libres de verre, des fibres de carbone ou des fibres naturelles.

3. Matières à mouler polyamide[5,10] selon la revendication 2, contenant comme composant B) des fibres de verre coupées ou des stratifils.

4. Matières à mouler Polyamide[5,10] selon les revendications 1 à 3, contenant 15 à 40 % en poids de charge contenant des fibres.

5. Matières à mouler polyamide[5,10] selon les revendications 1 à 4, contenant comme composant C) des agents ignifuges tels que le phosphore rouge, l'hydroxyde de magnésium ou le cyanurate de mélamine.

6. Matières à mouler polyamide[5,10] selon les revendications 1 à 5, contenant comme composant C) des charges particulaires telles que le noir de carbone, le graphite, des nanotubes de carbone, la nigrosine, le bioxyde de titane, le sulfure de zinc, le bleu outremer, l'oxyde de fer, des anthraquinones, des quinacridones, des phtalocyanines, des pérylènes ou des mélanges de ceux-ci.

7. Matières à mouler polyamide[5,10] selon la revendication 6, contenant comme composant C) 0,01 à 5 % en poids de noir de carbone.

8. Procédé pour la production de matières à mouler polyamide[5,10] selon l'une quelconque des revendication 1 à 3, **caractérisé en ce que**
i) on polycondense de la 1,5-pentaméthylènediamine, produite par Fermentation avec *Corynebacterium glutamicum,* et de l'acide sébacique ; et
ii) on compounde dans une extrudeuse le polyamide[5,10] ainsi obtenu avec 10 à 60 % en poids de charge fibreuse ou minérale.

9. Utilisation des matières à mouler polyamide[5,10] selon l'une quelconque des revendications 1 à 7, pour la production de corps moulés dans la construction d'automobiles ou en électronique.

10. Fibres, films, corps moulés, pouvant être obtenus à partir de matières à mouler Polyamide[5,10] selon l'une quelconque des revendications 1 à 7.
